# EUROPÄISCHE PATENTSCHRIFT

(11) **EP 3 178 310 B1**
(45) Veröffentlichungstag und Bekanntmachung des Hinweises auf die Patenterteilung: **12.09.2018**
(21) Anmeldenummer: 16201759.4
(22) Anmeldetag: 01.12.2016
(51) Int. Cl.: A01D 89/00

(54) **AUFNAHMEVORRICHTUNG EINES LANDWIRTSCHAFTLICHEN ARBEITSGERÄTS**
PICKUP DEVICE OF AN AGRICULTURAL WORK DEVICE
DISPOSITIF DE RÉCEPTION D'UN ENGIN AGRICOLE

(30) Priorität: 07.12.2015 DE 102015121289
(43) Veröffentlichungstag der Anmeldung: 14.06.2017
(73) Patentinhaber: CLAAS Saulgau GmbH, 88348 Bad Saulgau (DE)
(72) Erfinder: Boll, Ulrich, 88348 Bad Saulgau (DE); Loebe, Stefan, 88348 Bad Saulgau (DE); Speer, Christian, 88348 Bad Saulgau (DE)

(56) Entgegenhaltungen:
- EP-A1- 2 777 378
- DE-A1- 2 733 932
- DE-A1- 3 315 033
- DE-C1- 3 309 791
- US-A- 4 161 859

## Beschreibung

Die Erfindung betrifft eine Aufnahmevorrichtung für ein landwirtschaftliches Arbeitsgerät nach dem Oberbegriff des Anspruchs 1.

Ein landwirtschaftliches Arbeitsgerät wie ein Ladewagen, ein Häcksler oder auch eine Presse verfügt über eine Aufnahmevorrichtung, die dem Aufnehmen von geschnittenem und zu einem Schwad vereinigtem Erntegut, wie zum Beispiel von Gras, Heu oder Stroh, von einem Untergrund dient. Eine solche Aufnahmevorrichtung, mit der zu einem Schwad vereinigtes Erntegut von einem Untergrund aufnehmbar ist, wird auch als Pickup bezeichnet.

Eine solche Aufnahmeeinrichtung verfügt über einen um eine horizontal verlaufende Grundkörperachse drehend antreibbaren Grundkörper, wobei der Grundkörper mehrere Aufnahmezinken trägt, über die das Erntegut letztendlich vom Untergrund bei der Drehbewegung des Grundkörpers aufgenommen wird. Bei einer sogenannten ungesteuerten Aufnahmevorrichtung sind die Aufnahmezinken fest mit dem Grundkörper verbunden und führen zusammen mit dem Grundkörper immer eine feste Drehbewegung bzw. Rotationsbewegung aus. Bei einer sogenannten gesteuerten Aufnahmevorrichtung sind die Aufnahmezinken auf mehreren Zinkenträgern befestigt, wobei jeder Zinkenträger relativ zum Grundkörper um eine Zinkenträgerachse drehbar ist, die sich parallel zur Grundkörperachse erstreckt. Zur Steuerung der Drehbewegung der Zinkenträger relativ zum Grundkörper umfasst eine gesteuerte Aufnahmevorrichtung mindestens eine Steuereinheit. Gesteuerte Aufnahmeeinrichtungen erlauben gegenüber ungesteuerten Aufnahmevorrichtungen eine bessere Aufnahme des geschnittenen Ernteguts vom Untergrund sowie eine bessere Übergabe an nachfolgende Arbeitsorgane und sind daher für unterschiedliche Erntebedingungen geeignet. Aus der Praxis bekannte, gesteuerte Aufnahmevorrichtungen verfügen jedoch über den Nachteil, dass dieselben einer Verschmutzung und infolge der Verschmutzung einem erhöhten Verschleiß ausgesetzt sind, wodurch die Lebensdauer solcher gesteuerter Aufnahmeeinrichtungen begrenzt ist.

Aus EP 2 777 378 A1 ist ein Nockenmechanismus zur Steuerung von Zinken einer Aufnahmeeinrichtung bekannt, der in einem zweiteiligen Gehäuse angeordnet ist.

DE 27 33 932 A1 offenbart eine Aufnahmevorrichtung für Sammelanhänger, Feldhäcksler, Mähdrescher und dergleichen, die ein vor Staub geschütztes Steuersystem für die Aufnehmerzinken aufweist.

Es besteht Bedarf an gesteuerten Aufnahmeeinrichtungen, die weniger verschleißanfällig sind.

Hiervon ausgehend liegt der vorliegenden Erfindung die Aufgabe zugrunde, eine neuartige Aufnahmevorrichtung eines landwirtschaftlichen Arbeitsgeräts zu schaffen. Diese Aufgabe wird durch eine Aufnahmevorrichtung nach Anspruch 1 gelöst. Erfindungsgemäß ist die oder jede Steuereinheit als geschlossene und damit gekapselte Getriebeeinheit ausgebildet. Dadurch, dass die jeweilige Steuereinheit als geschlossene Getriebeeinheit ausgebildet ist, können keine Verunreinigungen in dieselbe eindringen. Dieselbe ist daher einem geringeren Verschleiß ausgesetzt, wodurch die Lebensdauer erhöht werden kann.

Die jeweilige Steuereinheit umfasst ein geschlossenes, gekapseltes Gehäuse aus einem ersten, dem Grundkörper zugewandten, rotierenden Gehäuseteil und einem zweiten, von dem Grundkörper abgewandten, feststehenden Gehäuseteil. Ein derartiges Gehäuse ist bevorzugt, um bei einfacher Bauform die Steuerfunktion zu gewährleisten und weiterhin das Eindringen von Verschmutzungen zu verhindern und so die Verschleißanfälligkeit zu reduzieren.

Vorzugsweise sind in einem von dem Gehäuse definierten Innenraum mindestens eine vom zweiten Gehäuseteil bereitgestellte Kurvenbahn und mit der jeweiligen Kurvenbahn zusammenwirkende Laufrollen aufgenommen. Auch dies dient der Bereitstellung der Steuerfunktion bei geringer Verschleißanfälligkeit.

Eine Zentralwelle, die dem Antreiben des Grundkörpers dient, erstreckt sich durch das erste Gehäuseteil und das zweite Gehäuseteil und ist mit dem ersten Gehäuseteil drehfest verbunden, wobei zwischen den beiden Gehäuseteilen und der Zentralwelle ein Dichtelement positioniert ist, welches radial außen an einem Scheibenkörper der Zentralwelle positioniert ist. Hiermit kann die Verschleißanfälligkeit weiter reduziert werden.

Vorzugsweise sind an der Zentralwelle mit den Laufrollen über Hebel gekoppelte Kurbeln gelagert, die mit den Zinkenträgern verbunden sind, wobei zwischen der Zentralwelle und jeder Kurbel jeweils ein weiteres Dichtelement positioniert ist.

Auch diese Ausführung dient der weiteren Reduzierung der Verschleißanfälligkeit der erfindungsgemäßen Aufnahmeeinrichtung.

Bevorzugte Weiterbildungen der Erfindung ergeben sich aus den Unteransprüchen und der nachfolgenden Beschreibung. Ein Ausführungsbeispiele der Erfindung wird, ohne hierauf beschränkt zu sein, an Hand der Zeichnung näher erläutert. Dabei zeigt:
- Fig. 1: eine perspektivische Ansicht einer Aufnahmevorrichtung eines landwirtschaftlichen Arbeitsgeräts;
- Fig. 2: ein Detail der Fig. 1;
- Fig. 3: eine perspektivische Ansicht einer Steuereinheit der Aufnahmevorrichtung der Fig. 1;
- Fig. 4: eine teilweise Explosionsdarstellung der Fig. 3;
- Fig. 5: eine weitere perspektivische Ansicht einer Steuereinheit der Aufnahmevorrichtung der Fig. 1;
- Fig. 6: eine teilweise Explosionsdarstellung der Fig. 5; und
- Fig. 7: einen ausschnittweisen Querschnitt durch die Aufnahmevorrichtung der Fig. 1.

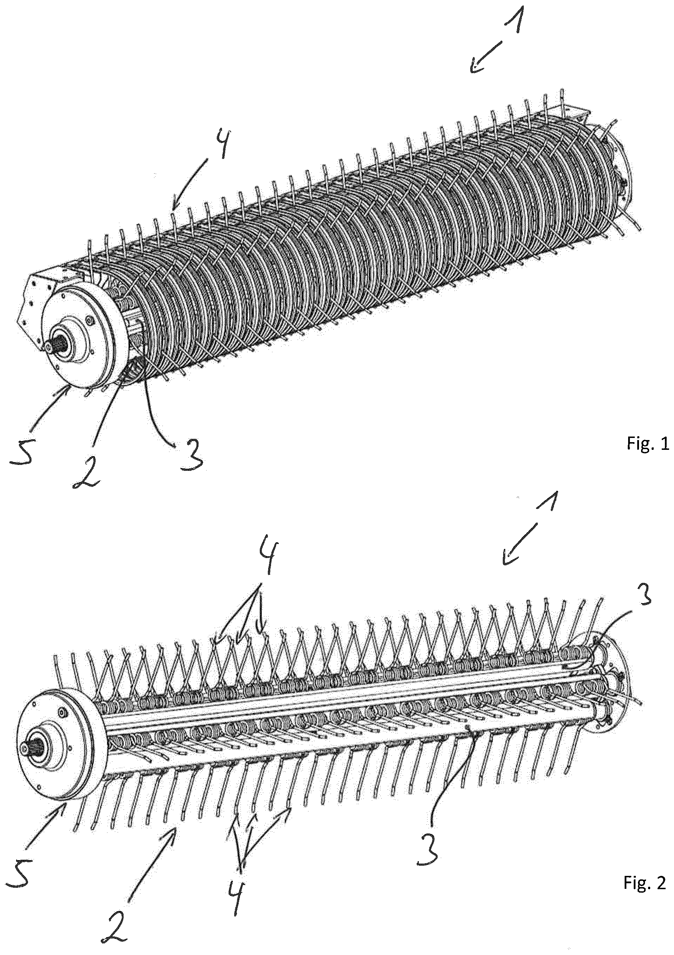

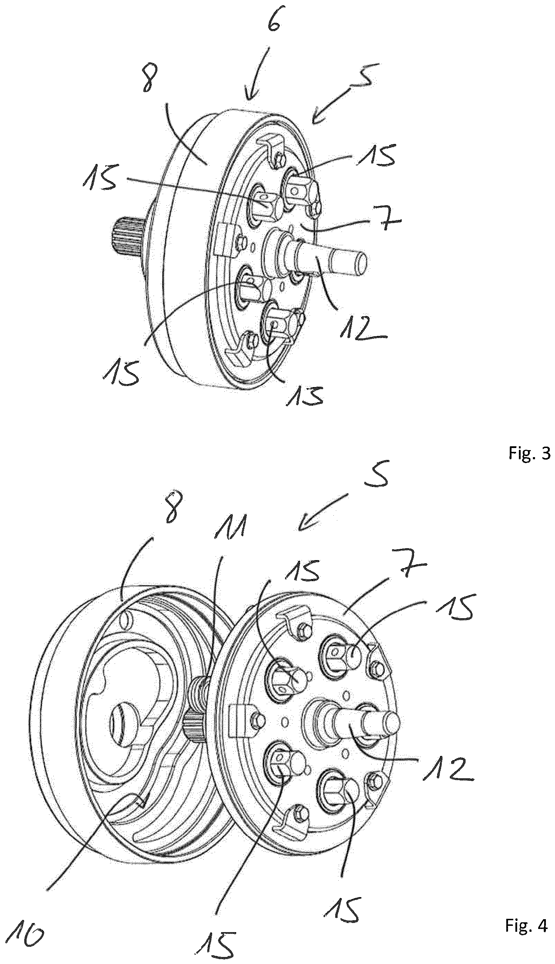

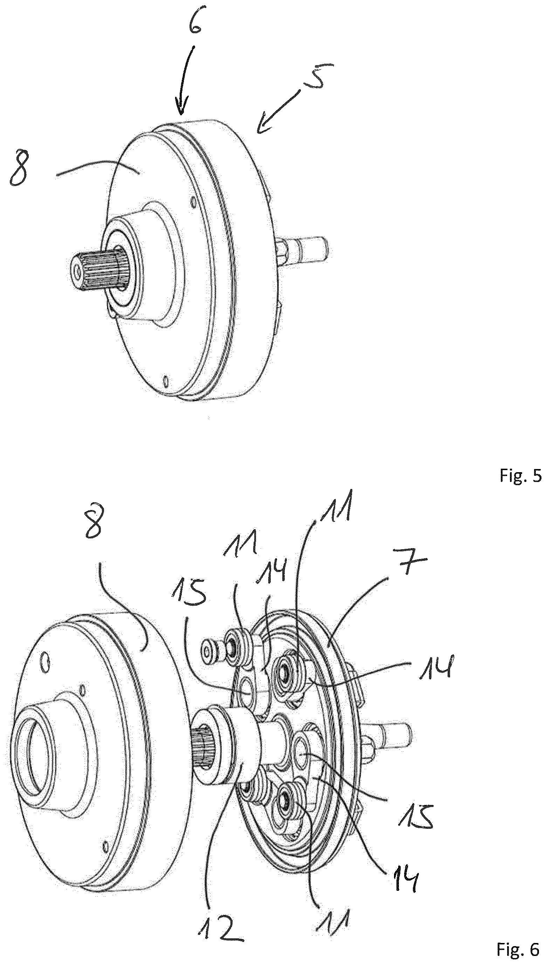

Die Erfindung betrifft eine Aufnahmeeinrichtung für ein landwirtschaftliches Arbeitsgerät, insbesondere für einen landwirtschaftlichen Ladewagen, einen Häcksler oder eine Presse. Eine solche Aufnahmeeinrichtung dient dem Aufnehmen von geschnittenem und vorzugsweise zu einem Schwad vereinigtem Erntegut von einem Untergrund. Nachfolgend wird die erfindungsgemäße Aufnahmeeinrichtung unter Bezugnahme auf Fig. 1 bis 7 beschrieben, wobei Fig. 1 bis 7 unterschiedliche Darstellungen und Details einer erfindungsgemäßen Aufnahmeeinrichtung 1 zeigen.

Eine Aufnahmeeinrichtung 1 verfügt über einen Grundkörper 2, der um eine horizontal verlaufende Grundkörperachse drehend angetrieben werden kann. Der Grundkörper 2 verfügt über mehrere an dem Grundkörper 2 gelagerte Zinkenträger 3, wobei an jedem Zinkenträger 3 jeweils mehrere Aufnahmezinken 4 befestigt sind.

Die Zinkenträger 3, welche die Aufnahmezinken 4 tragen, sind zusammen mit dem Grundkörper 2 drehend antreibbar, zusätzlich kann jeder Zinkenträger 3 um eine parallel zur Grundkörperachse des Grundkörpers 2 verlaufende Zinkenträgerachse relativ zum Grundkörper 2 gedreht werden.

Zur Steuerung dieser Drehbewegung der Zinkenträger 3 relativ zum drehend antreibbaren Grundkörper 2 umfasst die Aufnahmevorrichtung 1 mindestens eine Steuereinheit 5. Im gezeigten Ausführungsbeispiel ist auf der gegenüberliegenden Seite der Steuereinheit 5 eine Lagerungseinheit für die Zinkenträger 3 vorgesehen.

Um ein Eindringen von Verschmutzungen in die jeweilige Steuereinheit 5 zu verhindern, ist die Steuereinheit 5 als geschlossene und damit gekapselte Getriebeeinheit ausgeführt. Dieselbe ist weniger verschleißanfällig und verfügt über eine erhöhte Lebensdauer.

Die als geschlossene und damit gekapselte Getriebeeinheit ausgeführte Steuereinheit 5 verfügt über ein geschlossenes und damit gekapseltes Gehäuse 6 aus einem ersten, dem Grundkörper 2 zugewandten, zusammen mit dem Grundkörper 2 rotierenden Gehäuseteil 7 und einem zweiten, von dem Grundkörper 2 abgewandten, feststehenden Gehäuseteil 8.

Die beiden Gehäuseteile 7 und 8 des Gehäuses 6 der Steuereinheit 5 definieren einen Innenraum 9, indem zumindest eine vom zweiten, feststehenden Gehäuseteil 8 bereitgestellte Kurvenbahn 10 sowie mit der Kurvenbahn 10 zusammenwirkende Laufrollen 11 aufgenommen sind.

Zum Antreiben des Grundkörpers 2 der Aufnahmevorrichtung zusammen mit den an dem Grundkörper 2 gelagerten Zinkenträgern 3 dient eine Zentralwelle 12, die sich durch beide Gehäuseteile 7 und 8 hindurch erstreckt, nämlich durch das feststehende, zweite Gehäuseteil 8 sowie durch das rotierende, erste Gehäuseteil 7.

Das erste Gehäuseteil 7 ist mit der Zentralwelle 12 fest verbunden und rotiert zusammen mit derselben.

Die Zentralwelle 12 ragt mit einem Abschnitt in eine Buchse 22 des Grundkörpers 2 hinein und ist mit dem Grundkörper 2 drehfest verbunden.

Das zweite, feststehende Gehäuseteil 8 nimmt Lager 13 auf, die der drehenden Lagerung der Zentralwelle 12 im feststehenden Gehäuseteil 8 dienen.

An der Zentralwelle 12 sind mit den Laufrollen 11 über Hebel 14 gekoppelte Kurbeln 15 gelagert, nämlich über Lager 16. An diesen Kurbeln 15, die beidseitig gegenüber einem Scheibenkörper 17 der Zentralwelle 12 vorstehen, greift an einer dieser Seiten eine entsprechende Laufrolle 11 über einen Hebel 14 an, an einer gegenüberliegenden Seite sind die Kurbeln 15 über Verbindungseinrichtungen 18 mit den Zinkenträgern 13 fest verbunden.

Bei Drehung des Grundkörpers 2 über die Zentralwelle 12 werden auch die Zinkenträger 3 drehend angetrieben, und so auch die Kurbeln 15 mit den Laufrollen 11. Dabei rollen die Laufrollen 11 auf der von dem feststehenden Gehäuseteil 8 des Gehäuses 6 der Steuereinheit 5 bereitgestellten Kurvenbahn 10 ab, wodurch eine Drehbewegung der Kurbeln 15 und damit letztendlich der mit den Kurbeln 15 gekoppelten Zinkenträger 3 um ihre Zinkenträgerachsen, die sich parallel zur Grundkörperachse des Grundkörpers 2 erstrecken, relativ zum Grundkörper 2 verursacht wird. Hierdurch können die von den Zinkenträgern 3 aufgenommenen Aufnahmezinken 4 bei der Drehbewegung des Grundkörpers 2 eine Relativbewegung zum Grundkörper 2 ausführen.

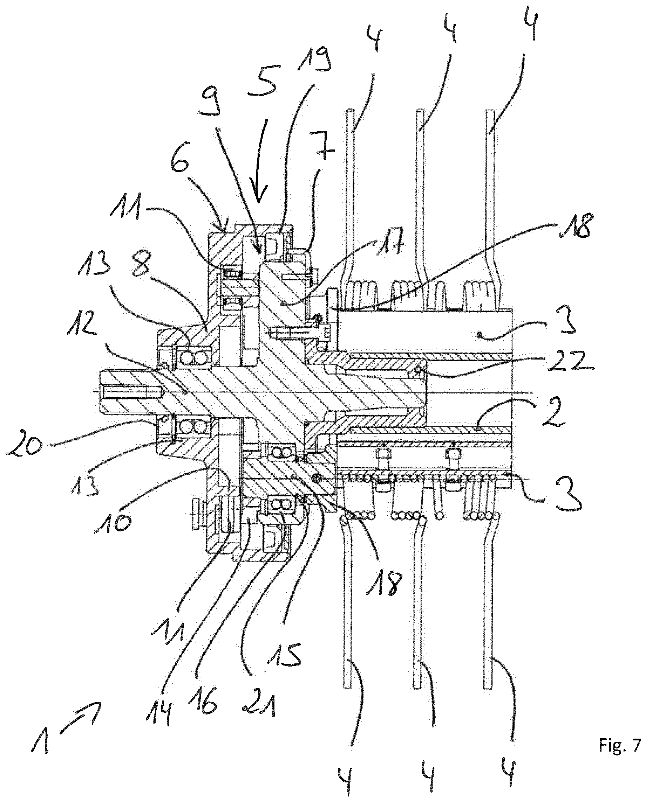

Gemäß Fig. 7 ist zwischen den beiden Gehäuseteilen 7 und 8 des Gehäuses 6 sowie dem Scheibenkörper 17 der Zentralwelle 12 radial außen ein Dichtelement 19 positioniert, welches das Gehäuse 6 abdichtet und das Eintreten von Verschmutzungen in dasselbe unterbindet. Ein weiteres Dichtelement 20 ist radial innen zwischen dem feststehenden Gehäuseteil 8 und dem aus demselben heraustretenden Abschnitt der Zentralwelle 12 benachbart zum Lager 13 positioniert. Ferner sind weitere Dichtelemente 21 zwischen den Kurbeln 15 und dem Scheibenkörper 17 der Zentralwelle 12 benachbart zu den Lagern 16 positioniert, wobei diese Dichtelemente 21 in Radialrichtung gesehen zwischen dem radial äußeren Dichtelement 19 und dem radial inneren Dichtelement 20 positioniert sind. Hierdurch wird ein geschlossener und damit gekapselter Innenraum 9 des Gehäuses 6 bereitgestellt, in den von außen keine Verunreinigungen eindringen können, welche die Lebensdauer der Steuereinheit 5 beeinträchtigen.

In den gekapselten Innenraum 9 des Gehäuses 6 kann vorteilhaft eine Schmierstofffüllung - wie beispielsweise Fließfett oder Öl - eingebracht werden. Der Schmierstoff reduziert die Reibung zwischen den relativ zueinander bewegten Teilen, insbesondere zwischen den Laufrollen 11 und der Kurvenbahn 10. Dadurch wird der Verschleiß einer erfindungsgemäßen Aufnahmeeinheit vorteilhaft verringert.

### Bezugszeichenliste

- 1: Aufnahmevorrichtung
- 2: Grundkörper
- 3: Zinkenträger
- 4: Aufnahmezinke
- 5: Steuereinheit
- 6: Gehäuse
- 7: Gehäuseteil
- 8: Gehäuseteil
- 9: Innenraum
- 10: Kurvenbahn
- 11: Laufrolle
- 12: Zentralwelle
- 13: Lager
- 14: Hebel
- 15: Kurbel
- 16: Lager
- 17: Scheibenkörper
- 18: Verbindungseinrichtungen
- 19: Dichtelement
- 20: Dichtelement
- 21: Dichtelement
- 22: Buchse

## Patentansprüche

1. Aufnahmevorrichtung (1) für ein landwirtschaftliches Arbeitsgerät, insbesondere für einen Ladewagen, einen Häcksler oder eine Presse, zum Aufnehmen von geschnittenem und von vorzugsweise zu einem Schwad vereinigtem Erntegut von einem Untergrund, mit einem drehend um eine horizontal verlaufende Grundkörperachse antreibbaren Grundkörper (2), mit mehreren an dem Grundkörper (2) gelagerten Zinkenträgern (3), an denen jeweils mehrere Aufnahmezinken (4) befestigt sind und die gegenüber dem Grundkörper (2) um parallel zur Grundkörperachse verlaufende Zinkenträgersachsen drehbar sind, und mit mindestens einer Steuereinheit (5), über welche die Drehung der Zinkenträger (3) steuerbar ist, wobei die oder jede Steuereinheit (5) als geschlossene Getriebeeinheit ausgebildet ist, wobei die jeweilige Steuereinheit (5) ein geschlossenes Gehäuse (6) aus einem ersten, dem Grundkörper (2) zugewandten, rotierenden Gehäuseteil (7) und einem zweiten, von dem Grundkörper (2) abgewandten, feststehenden Gehäuseteil (8) umfasst, wobei eine Zentralwelle (12), die dem Antreiben des Grundkörpers (2) dient, sich durch das erste Gehäuseteil (7) und das zweite Gehäuseteil (8) erstreckt und mit dem ersten Gehäuseteil (7) drehfest verbunden ist, **dadurch gekennzeichnet, dass** die jeweilige Steuereinheit (5) ein gekapseltes Gehäuse (6) umfasst, wobei zwischen den beiden Gehäuseteilen (7, 8) und der Zentralwelle (12) ein Dichtelement (19) positioniert ist, welches radial außen an einem Scheibenkörper (17) der Zentralwelle (12) positioniert ist.

2. Aufnahmevorrichtung nach Anspruch 1, **dadurch gekennzeichnet, dass** in einem von dem Gehäuse (6) definierten Innenraum (9) mindestens eine vom zweiten Gehäuseteil (8) bereitgestellte Kurvenbahn (10) und mit der jeweiligen Kurvenbahn (10) zusammenwirkende Laufrollen (11) aufgenommen sind.

3. Aufnahmevorrichtung nach Anspruch 1, **dadurch gekennzeichnet, dass** an der Zentralwelle (12) mit den Laufrollen (11) gekoppelte Kurbeln (15) gelagert sind, die mit den Zinkenträgern (3) verbunden sind.

4. Aufnahmevorrichtung nach Anspruch 3, **dadurch gekennzeichnet, dass** die Laufrollen (11) mit den Kurbeln (15) über Hebel (14) gekoppelt sind.

5. Aufnahmevorrichtung nach Anspruch 3 oder 4, **dadurch gekennzeichnet, dass** zwischen der Zentralwelle (12) und jeder Kurbel (15) jeweils ein Dichtelement (21) und Lager (16) positioniert ist.

6. Aufnahmevorrichtung nach einem der Ansprüche 3 bis 5, **dadurch gekennzeichnet, dass** die Kurbeln (15) und die Laufrollen (11) über die Zentralwelle (12) relativ zum feststehenden, zweiten Gehäuseteil (8), welches die oder jede Kurvenbahn (10) bereitstellt, antreibbar sind.

7. Aufnahmevorrichtung nach einem der Ansprüche 1 bis 6, **dadurch gekennzeichnet, dass** zwischen der Zentralwelle (12) und dem zweiten Gehäuseteil (8) ein Dichtelement (20) und ein Lager (13) positioniert ist.

8. Aufnahmevorrichtung nach einem der vorangehenden Ansprüche, **dadurch gekennzeichnet, dass** in die geschlossene Getriebeeinheit eine Schmierstofffüllung, insbesondere Fließfett oder Öl, eingebracht ist.

## Claims

1. Pick-up device (1) for an agricultural implement, in particular for a forage wagon, a chopper or a baler, for picking up cut harvested material, and preferably harvested material combined into a swath, from the ground, having a base body (2) that can be driven rotating about a horizontally running base body axis, with several tine brackets (3) mounted on the base body (2), to each of which several pick-up tines (4) are secured and which are rotatable relative to the base body (2) about tine bracket axes running parallel to the base body axis, and having at least one control unit (5) via which the rotation of the tine brackets (3) can be controlled, wherein the or each control unit (5) is formed as a closed transmission unit, wherein the respective control unit (5) comprises a closed housing (6) made of a first rotating housing part (7), facing the base body (2), and a second fixed housing part (8), facing away from the base body (2), wherein a central shaft (12), which serves to drive the base body (2), extends through the first housing part (7) and the second housing part (8) and is connected in a rotatably fixed manner to the first housing part (7), **characterized in that** the respective control unit (5) comprises an enclosed housing (6), wherein there is positioned between the two housing parts (7, 8) and the central shaft (12) a sealing element (19) which is positioned radially outwards on a disc body (17) of the central shaft (12).

2. Pick-up device according to claim 1, **characterized in that** there are accommodated in an internal space (9) defined by the housing (6) at least one cam track (10) provided by the second housing part (8) and guide rollers (11) interacting with the respective cam track (10).

3. Pick-up device according to claim 1, **characterized in that** there are mounted on the central shaft (12) cranks (15), coupled to the guide rollers (11), which are connected to the tine brackets (3).

4. Pick-up device according to claim 3, **characterized in that** the guide rollers (11) are coupled to the cranks (15) via arms (14).

5. Pick-up device according to claim 3 or 4, **characterized in that** in each case a sealing element (21) and bearing (16) are positioned between the central shaft (12) and each crank (15).

6. Pick-up device according to one of claims 3 to 5, **characterized in that** the cranks (15) and the guide rollers (11) are drivable via the central shaft (12) relative to the fixed second housing part (8), which provides the or each cam track (10).

7. Pick-up device according to one of claims 1 to 6, **characterized in that** a sealing element (20) and a bearing (13) are positioned between the central shaft (12) and the second housing part (8).

8. Pick-up device according to one of the preceding claims, **characterized in that** lubricant, in particular semi-fluid grease or oil, is introduced into the closed transmission unit.

## Revendications

1. Dispositif de ramassage (1) pour un appareil de travail agricole, en particulier pour une remorque autochargeuse, une ensileuse ou une presse, afin de ramasser sur le terrain du produit de récolte coupé ou rassemblé de préférence sous la forme d'un andain, comprenant un corps de base (2) entraînable en rotation autour d'un axe de corps de base s'étendant horizontalement, comprenant plusieurs porte-dents qui sont montés sur le corps de base (2), sur chacun desquels sont fixées plusieurs dents de ramassage (4) et qui peuvent tourner par rapport au corps de base (2) autour d'axes de porte-dents s'étendant parallèlement à l'axe de corps de base, et comprenant au moins une unité de commande (5) par l'intermédiaire de laquelle la rotation des porte-dents (3) est commandable, la ou chaque unité de commande (5) étant conformée en unité de transmission fermée, l'unité de commande respective (5) comprenant un carter fermé (6) composé d'une première partie de carter rotative (7) tournée vers le corps de base (2) et d'une seconde partie de carter fixe (8) opposée au corps de base (2), un arbre central (12), qui sert à l'entraînement du corps de base (2), s'étendant à travers la première partie de carter (7) et la seconde partie de carter (8) et étant solidarisé en rotation à la première partie de carter (7), **caractérisé en ce que** l'unité de commande respective (5) comprend un carter hermétique (6), entre les deux parties de carter (7, 8) et l'arbre central (12) étant positionné un élément d'étanchéité (19) qui est positionné radialement à l'extérieur sur un corps circulaire (17) de l'arbre central (12).

2. Dispositif de ramassage selon la revendication 1, **caractérisé en ce que** dans un espace intérieur (9) défini par le boîtier (6) sont logés au moins une rampe (10), fournie par la seconde partie de carter (8), et des galets de roulement (11) coopérant avec la rampe respective (10).

3. Dispositif de ramassage selon la revendication 1, **caractérisé en ce que** sur l'arbre central (12) sont montés des manetons (15) qui sont couplés aux galets de roulement (11) et qui sont reliés aux porte-dents (3).

4. Dispositif de ramassage selon la revendication 3, **caractérisé en ce que** les galets de roulement (11) sont couplés aux manetons (15) par l'intermédiaire de leviers (14).

5. Dispositif de ramassage selon la revendication 3 ou 4, **caractérisé en ce qu'**entre l'arbre central (12) et chaque maneton (15) est positionné un élément d'étanchéité (21) et un palier (16).

6. Dispositif de ramassage selon une des revendications 3 à 5, **caractérisé en ce que** les manetons (15) et les galets de roulement (11) sont entraînables par l'intermédiaire de l'arbre central (12) par rapport à la seconde partie de carter fixe (8), laquelle fournit la ou chaque rampe (10).

7. Dispositif de ramassage selon une des revendications 1 à 6, **caractérisé en ce qu'**entre l'arbre central (12) et la seconde partie de carter (8) est positionné un élément d'étanchéité (20) et un palier (13).

8. Dispositif de ramassage selon une des revendications précédentes, **caractérisé en ce que** dans l'unité de transmission fermée est introduit un lubrifiant, en particulier de la graisse liquide ou de l'huile.
